# EUROPEAN PATENT SPECIFICATION

(11) **EP 3 043 201 B1**
(45) Date of publication and mention of the grant of the patent: **08.08.2018**
(21) Application number: 15201787.7
(22) Date of filing: 21.12.2015
(51) Int. Cl.: G02B 27/01, H05K 5/06

(54) **IMAGE DISPLAY DEVICE**
BILDANZEIGEVORRICHTUNG
DISPOSITIF D'AFFICHAGE D'IMAGE

(30) Priority: 06.01.2015 JP 2015000741
(43) Date of publication of application: 13.07.2016
(73) Proprietor: Seiko Epson Corporation, Shinjuku-ku Tokyo (JP)
(72) Inventor: FUJISHIRO, Takeshi, Suwa-shi, Nagano 392-8502 (JP)
(74) Representative: Miller Sturt Kenyon

(56) References cited:
- EP-A2- 2 117 024
- WO-A2-2013/049248
- JP-A- 2014 186 201
- US-A1- 2007 146 989
- US-A1- 2014 174 958

## Description

### BACKGROUND

### 1. Technical Field

The present invention relates to an image display device.

### 2. Related Art

Hitherto, as image display devices, mounted on the head of an observer, which displays an image so as to be capable of being visually recognized, head mounted displays (HMD) have been known. As such HMDs, virtual image display devices configured to display the image so as to be capable of being visually recognized as a virtual image, and to be capable of observing the outside world around an observer have been known (see, for example, JP-A-2014-186201).

The virtual image display device disclosed in JP-A-2014-186201 includes a first image forming main body and a second image forming main body which are provided on right and left sides of an observer, respectively, and light guide members that guide image light which is formed by these image forming main bodies to a right eye and a left eye of the observer, respectively. Among these, each of the light guide members reflects an image incident from a corresponding image forming main body to guide the image to the eyes of the observer, and transmits outside light to cause the outside light to be incident on the eyes of the observer. Thereby, the virtual image display device is configured as a see-through HMD which is capable of visually recognizing an image corresponding to the image light as a virtual image, and of observing even the outside world.

The observer wearing the virtual image display device disclosed in JP-A-2014-186201 can observe even the outside world, as described above, while visually recognizing a virtual image, and thus can perform a predetermined operation (for example, maintenance operation of the device) in a state where the virtual image display device is mounted. Therefore, the virtual image display device displays information such as a manual or instruction contents referred to in performing the predetermined operation, the observer can perform the predetermined operation while visually recognizing the information.

Incidentally, when the observer wearing the virtual image display device performs the predetermined operation, there is the possibility of a great impact being applied unexpectedly to the virtual image display device, for example, due to a collision with something or the like. Damage to the control substrate housed inside due to such a factor gives rise to the possibility of a defect occurring in an operation of the virtual image display device.

WO 2013/049248 discloses a see-through type head mounted display having a main body that includes an interior case and an exterior case. US 2014/0174958 discloses a biometric monitoring device including a case within a case.

EP2117024 discloses a waterproofing method for electronic devices in which an inside case is arranged within an exterior case. The method is shown as applied to electronics mounted the back of a head strap of a diving mask.

US 2007/0146989 discloses a waterproof housing for electronic equipment in which an exterior case for an electronic device has flow channels and discharge ports.

### SUMMARY

An advantage of some aspects of the invention is to provide an image display device capable of being stably operated.

According to an aspect of the invention there is provided head mounted display device as defined in claim 1.

According to the aspect, the inside case out of a plurality of cases which houses the control device is disposed in the exterior case of the main body. According to this, as compared to a case where the control device is disposed directly inside the exterior case, stress acting on the exterior case can be alleviated by the inside case. Therefore, it is possible to improve impact resistance to the control device, and to provide an image display device capable of being stably operated.

In addition, according to the aspect, the exterior case includes a space capable of housing the inside case. That is, the exterior case may not be provided with an impact resistance structure in order to improve impact resistance to the control device. Therefore, it is possible to improve the degree of freedom of the shape and dimensions of the exterior case and the degree of freedom of the arrangement of the inside case within the exterior case, that is, the degree of freedom of the arrangement of the control device.

In the aspect, the inside case includes a waterproof structure.

Here, when the image display device is used outdoors, there is an increasing possibility of dust or water infiltrating into the exterior case, as compared to a case where the device is used indoors. The infiltration of dust or water into the exterior case causes the concern of the control device deteriorating, and there is also the possibility of a defect occurring.

On the other hand, according to the aspect, the inside case has a waterproof structure, and thus even when liquid or dust infiltrates into the exterior case, it is possible to suppress the infiltration of the liquid or dust into the inside case. Therefore, it is possible to suppress a deterioration in the control device within the inside case which is caused by liquid having infiltrated into the exterior case, and to reliably and stably operate the image display device.

In the aspect, the inside case includes a case main body in which an internal space for housing the control device is formed, and which includes an opening for housing the control device in the internal space, and a cover member that covers the opening, and is attached to the case main body by an adhesive.

According to the aspect with this configuration, the case main body is sealed by the cover member which is attached with the adhesive, in a state where the control device is disposed therein. According to this, it is possible to simply form the inside case having a waterproof property and dust resistance in addition to impact resistance. Therefore, it is possible to simplify the structure of the inside case, and to suppress the deterioration in the control device through the inside case having a simple configuration.

In the aspect, the exterior case includes a first curved surface along a mounting region of the image display device, the case main body includes a second curved surface that faces the first curved surface and is curved along the first curved surface, the opening is located on the second curved surface, and that the cover member is attached to the second curved surface.

According to the aspect with this configuration, since the cover member is a flexible sheet member, the cover member can be easily attached to the second curved surface. The inside case is disposed so that the second curved surface faces the first curved surface of the exterior case, and thus it is possible to efficiently dispose the inside case in the inside of the exterior case. Therefore, it is possible to achieve a reduction in the size of the main body.

In the aspect, it is preferable that the cover member is a flexible sheet-shaped member.

Here, when the cover member is formed of a material having a predetermined strength, distortion or the like has a tendency to occur after attachment to the case main body. In this case, there is the possibility of the waterproof property and dust resistance of the inside case being damaged.

On the other hand, according to the aspect with this configuration, the opening is blocked by using the cover member which is a sheet-shaped member, and thus the cover member can be easily attached along the case main body. Therefore, it is possible to further simplify the configuration of the inside case, and to easily perform assembly.

In addition, even when distortion occurs in the cover member after attachment due to thermal expansion, secular change, or the like, the flexible cover member warps, and thus it is possible to prevent the cover member from being peeled off from the case main body. Therefore, it is possible to reliably secure the waterproof property and dust resistance of the inside case.

In the aspect, it is preferable that the exterior case includes a flow channel, formed along a bottom within the exterior case, which circulates liquid flowing into the exterior case, and a discharge port that discharges fluid circulating along the flow channel out of the exterior case.

According to the aspect with this configuration, the liquid having infiltrated into the exterior case can be discharged from the discharge port through the flow channel formed along the bottom within the exterior case. Therefore, since the liquid having flowed into the inside of the exterior case from the outside thereof can be prevented from remaining behind, and the liquid can be prevented from infiltrating into the inside case, it is possible to more reliably suppress a deterioration in the control device due to the liquid.

In the aspect, it is preferable that the main body is mounted on a head of the observer.

According to the aspect with this configuration, the main body having the display unit provided therein is mounted on the head, and thus it is possible to dispose the display unit at a position corresponding to the eyes of the observer. Here, when the image display device is used outdoors, as described above, there is the possibility of an impact being applied to the main body, or the possibility of liquid such as rain and dust flowing into the main body. However, since the inside case having the control device housed therein is covered with the exterior case, it is possible to secure durability against the impact, a waterproof property and dust resistance, and to suppress the occurrence of a defect in an operation of the image display device.

In the aspect, it is preferable to further include a left-eye display unit and a right-eye display unit that cause a left eye and a right eye of the observer to visually recognize the image, respectively, as the display unit.

According to the aspect with this configuration, each of the left eye and right eye of the observer can be caused to visually recognize the same image through the left-eye display unit and the right-eye display unit, and can also be caused to visually recognize different images. Therefore, it is possible to improve the convenience and versatility of the image display device.

In the aspect, it is preferable that the display unit includes a light guide member that guides light for forming the image to the eyes of the observer, and transmits outside light.

According to the aspect with this configuration, it is possible to observe the image and the periphery of the observer through the light guide member. Therefore, in addition to being capable of giving a sense of relief to the observer who is visually recognizing an image, it is possible to realize augmented reality by visually recognize an image overlaid on a surrounding scene. Therefore, it is possible to further improve the convenience and versatility of the image display device.

### BRIEF DESCRIPTION OF THE DRAWINGS

Embodiments of the invention will now be described by way of example only with reference to the accompanying drawings, wherein like numbers reference like elements.
Fig. 1 is a perspective view illustrating a virtual image display device according to an embodiment of the invention.
Fig. 2 is a perspective view illustrating the virtual image display device in the embodiment.
Fig. 3 is a perspective view illustrating the virtual image display device in the embodiment.
Fig. 4 is a perspective view illustrating an arm and a display unit in the embodiment.
Fig. 5 is a top view illustrating the virtual image display device in the embodiment.
Fig. 6 is a perspective view illustrating the inside of a head band portion in the embodiment.
Fig. 7 is a perspective view illustrating a lower case in the embodiment.
Fig. 8 is a front view illustrating an imaging unit in the embodiment.
Fig. 9 is a side view illustrating the head band portion in the embodiment.
Fig. 10 is an exploded perspective view illustrating a control unit in the embodiment.
Fig. 11 is an exploded perspective view illustrating the control unit in the embodiment.
Fig. 12 is a cross-sectional view illustrating the head band portion in the embodiment.
Fig. 13 is a top view illustrating the head band portion in the embodiment.
Fig. 14 is a perspective view illustrating a virtual image display device according to one modification example of the invention.
Fig. 15 is a top view illustrating a virtual image display device according another modification example of the invention.

### DESCRIPTION OF EXEMPLARY EMBODIMENTS

Hereinafter, an embodiment of the invention will be described with reference to the accompanying drawings.

### Schematic Configuration of Virtual Image Display Device

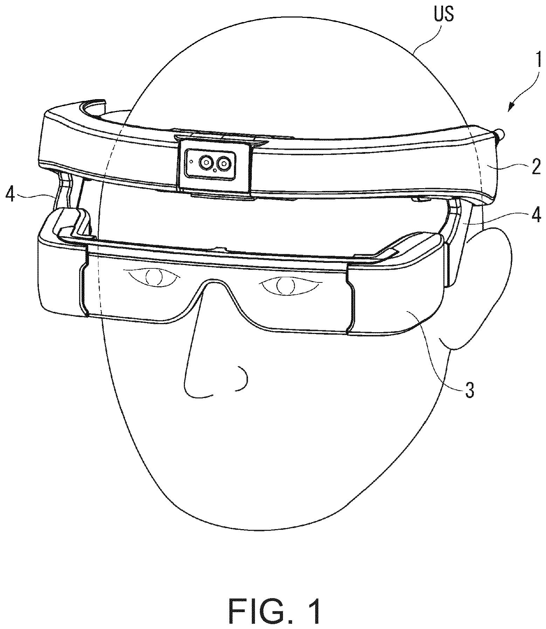

Fig. 1 is a perspective view illustrating a state where a virtual image display device 1 according to the present embodiment is worn on an observer US.

The virtual image display device 1 according to the present embodiment is equivalent to an image display device according to the invention. As shown in Fig. 1, the virtual image display device 1 is an HMD which is used in a state of being mounted on a mounting region (specifically, position corresponding to the upper portion of the head including the forehead and the temporal region) such as the head or a helmet of the observer US. The virtual image display device 1 is a see-through HMD that displays a virtual image so as to be capable of being visually recognized by the observer US, and enables the outside world to be observed by transmitting outside light.

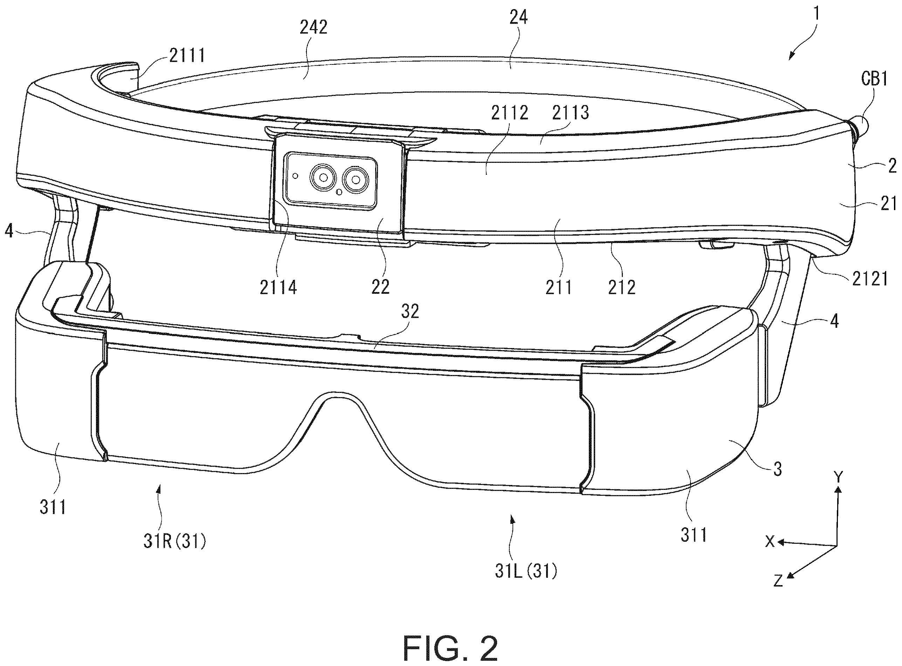

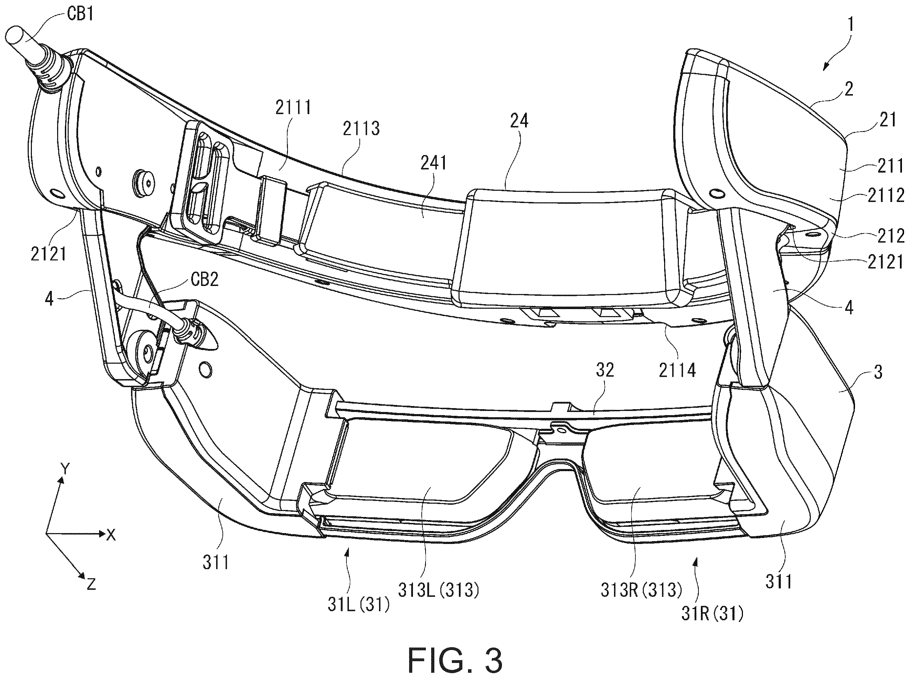

Figs. 2 and 3 are perspectives view when the virtual image display device 1 is seen from the front side and the back side. In other words, Fig. 2 is a perspective view when the virtual image display device 1 is seen from the opposite side to the observer US side, and Fig. 3 is a perspective view when the device seen from the observer US side.

As shown in Figs. 1 to 3, the virtual image display device 1 includes a head band portion 2 which is mounted on the head of the observer US, a helmet mounted on the head, or the like, a display unit 3 that displays the virtual image, and a pair of arms 4, rotatably attached to the head band portion 2, which connect the head band portion 2 and the display unit 3.

Meanwhile, in the following description, a Z-direction is a visual direction when the observer US wearing the virtual image display device 1 faces the front, and an X-direction and a Y-direction are directions which are orthogonal to the Z-direction and are orthogonal to each other. Among these directions, the X-direction is a direction from the left to the right when seen from the observer US wearing the virtual image display device 1, and the Y-direction is an upward direction when seen from the observer US. Further, the Z-direction side indicates a downstream side (Z-direction tip side) in the Z-direction, and the opposite side to the Z-direction indicates an upstream side (Z-direction base side) in the Z-direction. The same is true of other directions.

In addition, in the present embodiment, the head band portion 2 is described as being mounted on the head (specifically, region located further upward than the outer circumferential line of the head passing by eyebrows and ears) of the observer US. That is, the mounting region of the virtual image display device 1 is a position corresponding to the head of the observer US, and may have a helmet, a cap or the like interposed between the head and the head band portion 2.

Meanwhile, the head band portion 2 will be described later in detail.

### Configuration of Display Unit

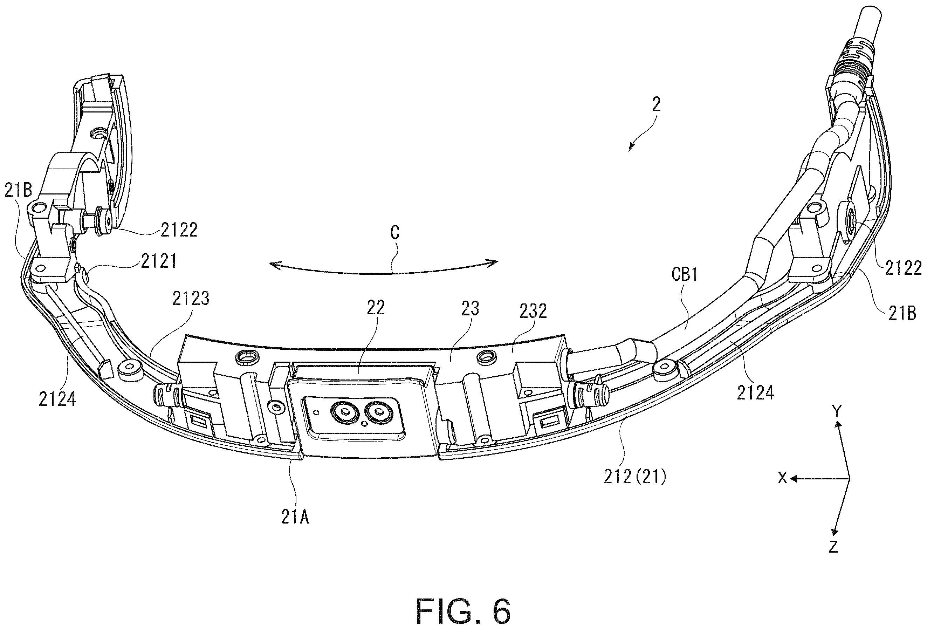

The display unit 3 forms an image corresponding to image information which is input from a control unit 23 (see Fig. 6) described later, and causes the observer US to visually recognize the image as a virtual image. As shown in Figs. 2 and 3, the display unit 3 includes a pair of optical devices 31 (left-eye and right-eye optical devices are designated as 31L and 31R, respectively) which are respectively disposed with respect to the right eye and the left eye of the observer US, and a substantially U-shaped frame portion 32 that holds the pair of optical devices 31.

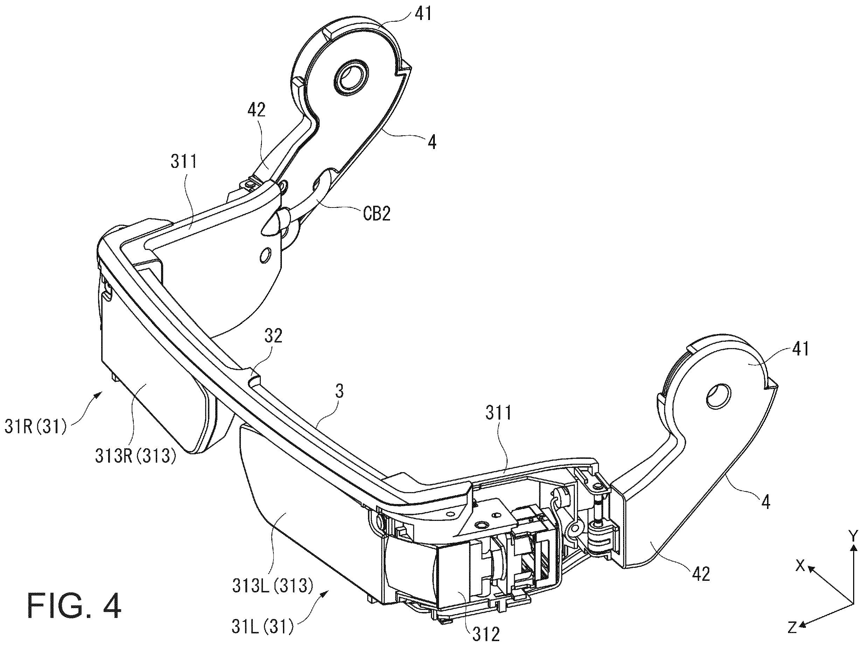

Fig. 4 is a diagram illustrating the inside of the optical devices 31, except for a portion of a cover member 311.

In the pair of optical devices 31, the left-eye optical device 31L located on the opposite side to the X-direction is equivalent to a left-eye display unit according to the invention, and the right-eye optical device 31R located on the X-direction side is equivalent to a right-eye display unit according to the invention. Meanwhile, the left-eye optical device 31L and the right-eye optical device 31R have a relationship in which the arrangement of the respective configurations is mirror-symmetrical with respect to each other.

As shown in Fig. 4, each of such pair of optical devices 31 includes a cover member 311, an optical unit 312, and a light guide member 313.

The cover member 311 is a housing having the optical unit 312 housed therein.

The optical unit 312 is disposed inside the cover member 311, modulates light incident from a light source device into image light, corresponding to image information to be input, through a light modulation device, and emits the image light to the corresponding light guide member 313. Meanwhile, a device using a micro-mirror such as, for example, a liquid crystal panel or a micro electro mechanical system (MEMS) mirror can be adopted as the light modulation device.

The light guide member 313 (right-eye and left-eye light guide members are designated as 313R and 313L, respectively) is disposed at a position corresponding to the eyes of the observer US. The light guide member 313 has a semi-transmissive layer (semi-reflective layer) formed therein, and is configured for the observer US to be capable of observing the outside world through the semi-transmissive layer. In addition thereto, the light guide member is configured such that a virtual image is visually recognized by image light, emitted from the optical unit 312 and reflected from the semi-transmissive layer, being incident on the eyes. Such a light guide member 313 is mainly formed of a resin (for example, cycloolefin polymer) showing a high light-transmissive property in a visible light region.

The frame portion 32 holds the pair of optical devices 31 on the Y-direction side. The left-eye optical device 31L is fixed to the opposite side to the X-direction of the frame portion 32, and the right-eye optical device 31R is fixed to the X-direction side.

Such optical devices 31R and 31L are connected to a cable CB2 that outputs image information (image signal) to each optical unit 312. As shown in Figs. 3 and 4, the cable CB2 extends out to the cover member 311, and then is inserted into the arms 4.

### Configuration of Arm

The pair of arms 4 connect an exterior case 21 of the head band portion 2 and each cover member 311 of the display unit 3, and are pivotally supported so as to be rotatable with respect to the exterior case 21. As shown in Fig. 4, each of these arms 4 has a first end 41 and a second end 42.

The first end 41 is an end on the opposite side to the Z-direction in the arm 4, and is configured to be inserted into an opening 2121 (see Figs. 2 and 3) of the exterior case 21 described later and is pivotally supported within the exterior case 21. Therefore, the arm 4 is rotatable in a predetermined range centering on a rotating shaft that pivotally supports the first end 41.

The second end 42 is an end on the Z-direction side in the arm 4, and is connected to the cover member 311 of the display unit 3.

Meanwhile, the virtual image display device 1 includes a movement mechanism, not shown, which relatively moves the display unit 3 and the arm 4, and attaches and detaches the display unit 3 to and from the head band portion 2. This movement mechanism includes, for example, a guide rail provided in the display unit 3 and a slide member which is engaged with the guide rail provided in the arm 4. In such a movement mechanism, a distance between the head band portion 2 and the display unit 3 can be adjusted by moving the display unit 3 with respect to the arm 4 while slidably moving the slide member along the guide rail.

### Configuration of Head Band Portion

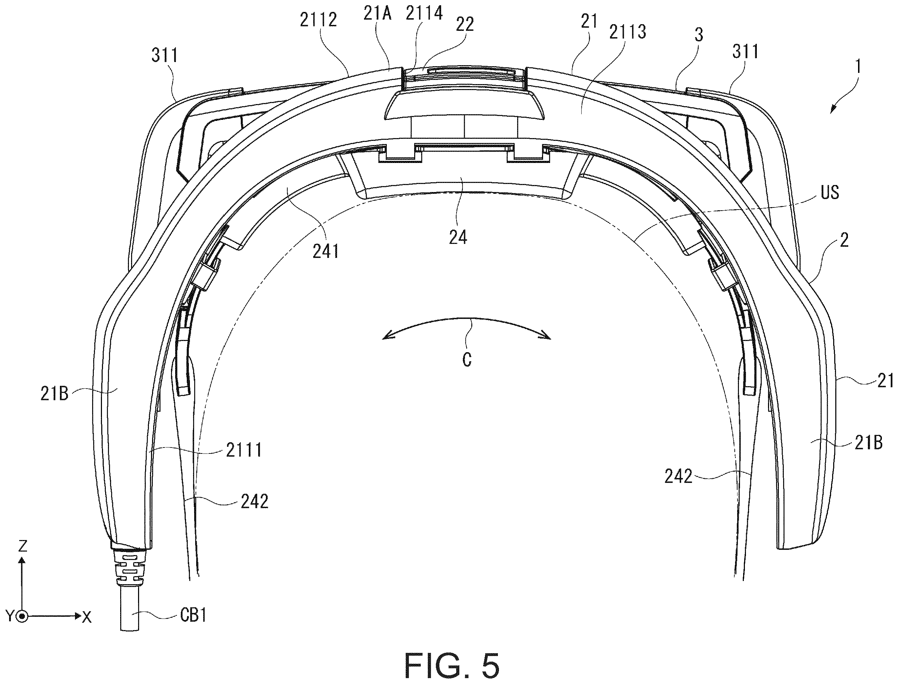

Fig. 5 is a diagram when the virtual image display device 1 is seen from an opposite side to the Y-direction.

As shown in Fig. 5, the head band portion 2 includes the exterior case 21, an imaging unit 22, the control unit 23 (see Fig. 6), and a mounting member 24 that mounts the exterior case 21 to the mounting region.

Meanwhile, the head band portion 2 is connected to a controller (not shown) that receives various types of input operation performed by the observer US with respect to the virtual image display device 1 through a cable CB1. Operation information and image information are transmitted from this controller to the control unit 23.

As shown in Fig. 5, the mounting member 24 includes a band main body 241 (see Fig. 3) which is attached to the exterior case 21 and a band member 242 which is attached to the band main body 241, and is formed by these components in an annular shape surrounding the periphery of the head of the observer US. That is, the mounting member 24 is disposed so as to surround the head of the observer US, and thus the exterior case 21 and the head band portion 2 are mounted along the head of the observer US.

### Configuration of Exterior Case

The exterior case 21 is formed so as to be curved in an arc shape (substantially U-shape) along the head of the observer US as the mounting region, and is disposed along the mounting region. Specifically, the exterior case 21 is disposed along the forehead and temporal region of the observer US (observer US showing a profile by a dashed-two dotted line in Fig. 5), and is fixed by the mounting member 24 described later.

The exterior case 21 includes a central portion 21A located at the center in a C direction (circumferential direction of the curved exterior case 21) in the exterior case 21, and a pair of side portions 21B located on both ends in the C direction.

The central portion 21A is formed so as to be curved along the forehead of the observer US, and is disposed along the forehead.

The side portion 21B extends out in an opposite direction to the Z-direction from both ends of the central portion 21A in the C direction, and is disposed along the temporal region of the observer US.

As shown in Figs. 2 and 3, such an exterior case 21 includes an upper case 211 located on the Y-direction side and a lower case 212 located on an opposite side to the Y-direction, and has a configuration in which the upper case 211 and the lower case 212 are combined.

### Configuration of Upper Case

As shown in Fig. 5, the upper case 211 includes an inner surface 2111 which is curved along the C direction so as to be located on the observer US side and be disposed facing the forehead and temporal region of the observer US, an outer surface 2112 which is a surface on the opposite side to the inner surface 2111, an upper surface 2113 on the Y-direction side, and an opening 2114.

Among these, the opening 2114 is formed throughout the upper surface 2113 from the outer surface 2112, at a position corresponding to the central portion 21A in the upper case 211. The imaging unit 22 described later is disposed within the opening 2114.

### Configuration of Lower Case

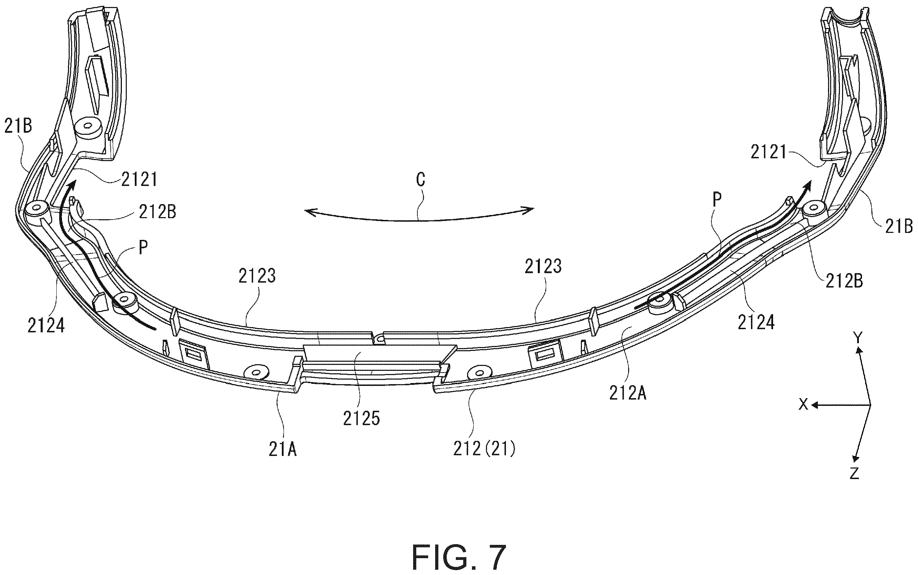

Fig. 6 is a perspective view illustrating the inside of the head band portion 2 with the exception of the upper case 211, and is a perspective view illustrating the lower case 212, the imaging unit 22, the control unit 23, and the like. In addition, Fig. 7 is a perspective view illustrating the lower case 212.

The lower case 212 supports the control unit 23 to which the imaging unit 22 is attached, and also rotatably supports the first end 41 of the arm 4. In addition, the lower case 212 is curved along the C direction, and is inclined so as to face an opposite side to the Y-direction toward an opposite side to the Z-direction, at an end side in the C direction (that is, position corresponding to the side portion 21B).

As shown in Figs. 6 and 7, the lower case 212 includes an opening 2121, a shaft 2122, an inner wall portion 2123, a guide portion 2124 and an installation portion 2125 (see Fig. 7).

As shown in Fig. 6, the opening 2121 and the shaft 2122 are formed in the vicinity of both ends in the C direction. The shaft 2122 rotatably supports the first end 41 of the arm 4 which is inserted into the opening 2121, and enables the display unit 3 and the arm 4 to be rotated with respect to the head band portion 2.

As shown in Fig. 7, the inner wall portion 2123 stands upright in the Y-direction from the end edge on the observer US side in the lower case 212.

As shown in Fig. 7, the guide portion 2124 is an elongated protrusion which is formed at a bottom 212A within the lower case 212 along the inner wall portion 2123, and is formed at a position located closer to the Z-direction side than the opening 2121. In the present embodiment, the guide portion 2124 is provided at a position corresponding to each of the side portions 21B and the end side of the central portion 21A of the exterior case 21 in the C direction.

A flow channel P that circulates liquid (fluid) such as water infiltrating (flowing) into the exterior case 21 toward the opening 2121 is formed at the bottom 212A within the lower case 212 by the inner wall portion 2123 and the guide portion 2124. That is, the opening 2121 also functions as a discharge port, as well as for having the arm 4 inserted thereinto.

Meanwhile, as described above, the lower case 212 is inclined to the opposite side to the Y-direction toward the opening 2121 on the opposite side to the Z-direction side, at a position corresponding to the side portion 21B. That is, when the lower case is worn on the observer US who stands upright, the flow channel P is formed along an inclined surface 212B (see Fig. 7) inclined vertically downward, in the vicinity of the opening 2121. Therefore, liquid infiltrating into the exterior case 21 can be efficiently circulated toward the opening 2121 along the inclined surface 212B.

As shown in Fig. 7, the installation portion 2125 is a region corresponding to the opening 2114 formed in the upper case 211, that is, a region which is located at substantially the center of the lower case 212 in the X-direction, and at which the control unit 23 having the imaging unit 22 attached thereto is installed. As shown in Fig. 6, the cable CB1 which is connected to the controller and the cable CB2 (see Fig. 4) extending out from the display unit 3 are connected to the control unit 23. These cables CB1 and CB2 are drawn along the lower case 212, and are disposed within a space which is formed inside by a combination of the lower case 212 and the upper case 211. Meanwhile, the configuration of the control unit 23 will be described later in detail.

### Configuration of Imaging Unit

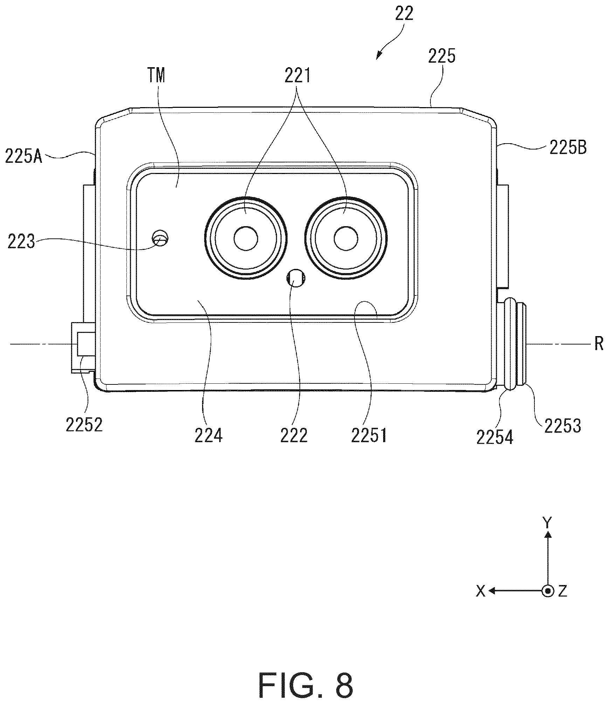

Fig. 8 is a diagram when the imaging unit 22 is seen from the opposite side to the Z-direction.

As shown in Fig. 5, the imaging unit 22 is disposed at a position corresponding to substantially the center of the exterior case 21 in the X-direction, that is, the forehead of the observer US so that an image capture direction faces the Z-direction side, and captures an image of the front of the observer US, that is, a portion of a region in the visual field of the observer US.

As shown in Fig. 8, the imaging unit 22 includes a substrate 224 on which a stereo camera 221 as an imaging element, an illuminance sensor 222 that detects the illuminance of outside light and an LED 223 are mounted, and a housing member 225 that has the substrate 224 housed therein. The LED 223 out of these functions as, for example, a power indicator which is turned on during driving of the virtual image display device 1, and is turned off during non-driving thereof.

The housing member 225 includes a window 2251, a first shaft 2252, a second shaft 2253, and a ring member 2254.

The window 2251 is provided on the surface of the housing member 225 in the Z-direction side, and is covered with a light-transmissive member TM. The stereo camera 221 captures an image of the outside through this light-transmissive member TM, and the illuminance sensor 222 detects the illuminance of outside light.

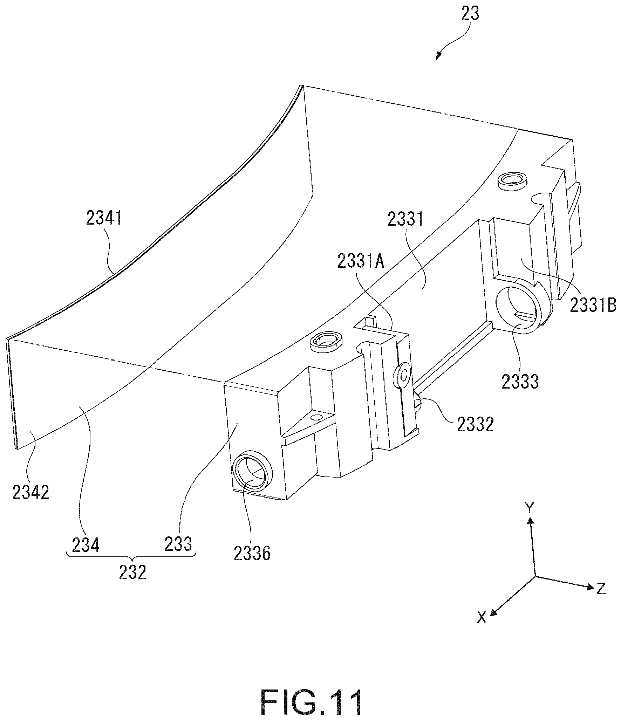

The first shaft 2252 protrudes substantially cylindrically along the X-direction from a first lateral side 225A of the housing member 225 in the X-direction side. The first shaft 2252 protrudes to the position of the first lateral side 225A on the opposite side to the Y-direction. The first shaft 2252 is inserted into a first bearing 2332 (see Fig. 11) which is provided in an inside case 232 of the control unit 23 described later.

The second shaft 2253 is equivalent to a rotating shaft according to the invention, and protrudes substantially cylindrically along the X-direction from a second lateral side 225B of the housing member 225 on the opposite side to the X-direction. The second shaft 2253 protrudes to the position of the second lateral side 225B on the opposite side to the Y-direction, that is, a position corresponding to the first shaft 2252 when seen along the X-direction. The second shaft 2253 is pivotally supported by a second bearing 2333 (see Fig. 11) which is provided in the inside case 232 of the control unit 23 described later.

A rotating shaft R parallel to the X-direction is specified by the first shaft 2252 and the second shaft 2253.

The ring member 2254 is an O-ring formed of an elastic body, and is attached to the second shaft 2253. The ring member 2254, described later in detail, is disposed between the second shaft 2253 and the second bearing 2333, and functions as a sealing member for obtaining a waterproof property and dust resistance between the second shaft 2253 and the second bearing 2333.

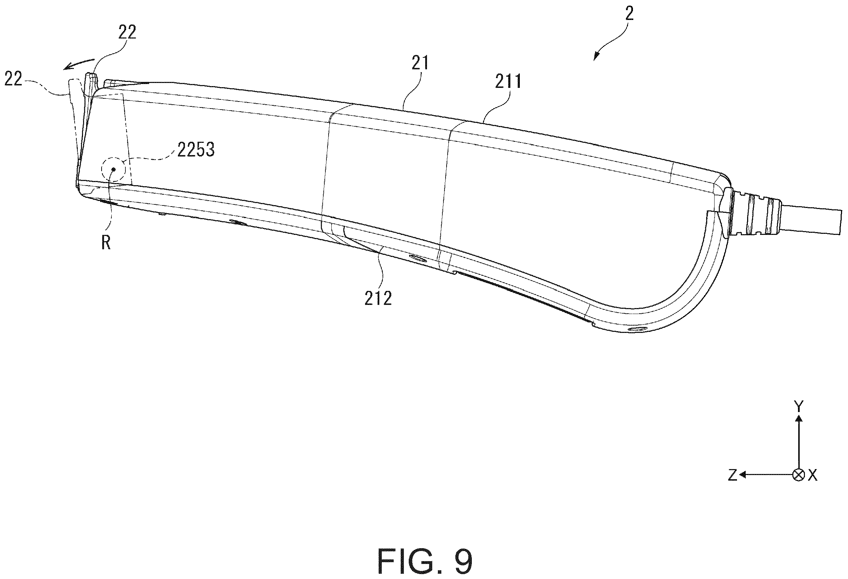

Fig. 9 is a diagram when the head band portion 2 is seen from the X-direction side, and a diagram illustrating a rotation state of the imaging unit 22.

In such an imaging unit 22, the housing member 225 is attached to the inside case 232 described later, and is configured to be rotatable within a predetermined range about the rotating shaft R which is specified by the first shaft 2252 and the second shaft 2253.

According to this, it is possible to adjust the posture of the housing member 225 with respect to the exterior case 21, and to adjust the image capture direction of the stereo camera 221 (that is, image capture direction of the imaging unit 22). In addition, the ring member 2254 provided on the outer circumference of the second shaft 2253 gives an appropriate sense of resistance between the second shaft 2253 of the housing member 225 and the second bearing 2333 of the inside case 232. Thereby, it is possible to maintain the position of the imaging unit 22 after rotation, and to improve an operational feeling.

### Configuration of Control Unit

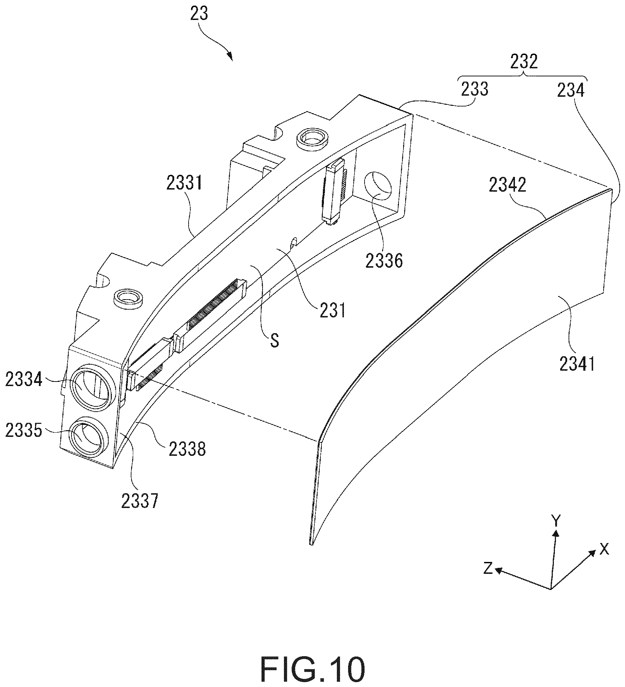

Fig. 10 is a perspective view when the control unit 23 is seen from a back side (opposite side to the Z-direction).

As shown in Fig. 6, the control unit 23 is disposed in the inside (that is, the installation portion 2125 (see Fig. 7)) of the exterior case 21 in a state where the imaging unit 22 is attached.

As shown in Fig. 10, the control unit 23 includes a control substrate 231 as a control device and an inside case 232. Meanwhile, the control unit 23 may be configured to include various types of detector such as a gyro sensor and a geomagnetic sensor, or various types of apparatus such as a receiver that receive a signal from a global positioning system (GPS) satellite, in addition to the above.

The control substrate 231 is communicably connected to a controller (not shown), the display unit 3 and the imaging unit 22 through the cables CB1 and CB2 (see Figs. 3 and 6), and controls at least a portion of functions of the virtual image display device 1.

Such functions include, for example, image display control for causing the display unit 3 to display an image and various types of image processing for a display image, and also includes imaging control of the imaging unit 22 or various types of processing using a captured image. Further, the function includes operation control of the virtual image display device 1 in response to an input signal from a controller. That is, when control contents and process contents of the control substrate 231 are at least a portion of functions realized in the virtual image display device 1, there is no particular limitation thereto.

Fig. 11 is a perspective view when the control unit 23 is seen from a front side (Z-direction side).

The inside case 232 is a case for forming an internal space S that has the control substrate 231 housed therein, and sealing the internal space S. The inside case 232 is disposed inside the exterior case 21 in a state where the control substrate 231 is housed.
The inside case 232 includes a case main body 233 and a cover member 234.

The case main body 233 is a box-shaped member in which a cross-section along a YZ plane is formed in a substantially U-shape. The case main body 233 includes a concave portion 2331, the first bearing 2332, the second bearing 2333, insertion holes 2334, 2335, and 2336, and an opening 2337.

As shown in Fig. 11, the concave portion 2331 is formed on the surface of the case main body 233 on the Z-direction side. Specifically, the concave portion 2331 includes a first lateral side 2331A on the X-direction side and a second lateral side 2331B on the opposite side to the X-direction, and has the imaging unit 22 disposed within a housing space interposed therebetween. The end edge of such a concave portion 2331 is connected to the end edge of the opening 2114 of the exterior case 21. For this reason, the case main body 233 is not likely to be exposed to the outside.

The first bearing 2332 is a hole which is formed on the first lateral side 2331A, and rotatably supports the inserted first shaft 2252.

The second bearing 2333 is a through-hole which is formed on the second lateral side 2331B, and rotatably supports the inserted second shaft 2253.

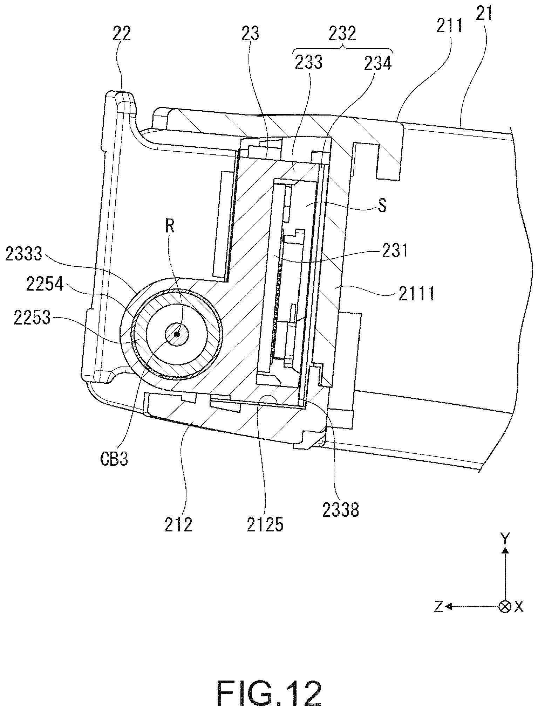

Fig. 12 is a diagram illustrating a cross-section of the head band portion 2 on a plane which is parallel to the YZ plane and passes through the second bearing 2333.

Here, as shown in Fig. 12, the second bearing 2333 has the second shaft 2253 to which the ring member 2254 is attached inserted thereinto. In this case, the ring member 2254 is closely attached to the inner surface of a through-hole for forming the second bearing 2333. The second shaft 2253 is rotatably supported by the second bearing 2333 through the ring member 2254, and a waterproof property and dust resistance between the second shaft 2253 and the second bearing 2333 is secured. That is, the ring member 2254 functions as a sealing member according to the invention.

Meanwhile, as shown in Fig. 12, a cable CB3 (signal line) for connecting the substrate 224 of the imaging unit 22 and the control substrate 231 are inserted in the inside of the second shaft 2253 having a cylindrical cross-section.

Referring back to Fig. 10, the first insertion hole 2334 is formed at the lateral side of the case main body 233 on the opposite side to the X-direction, is drawn into the exterior case 21, not shown, and has the cable CB1 (see Fig. 6) for connecting the controller and the control substrate 231 inserted thereinto.

The second insertion hole 2335 and the third insertion hole 2336 extend out from the optical devices 31L and 31R of the display unit 3, respectively, and has each cable CB2 drawn into the exterior case 21 through the arm 4 inserted thereinto. As shown in Fig. 10, the second insertion hole 2335 of these holes is formed at the lateral side of the case main body 233 on the opposite side to the X-direction, and has the cable CB2 extended out from the left-eye optical device 31L inserted thereinto. On the other hand, the third insertion hole 2336 is formed at the lateral side of the case main body 233 on the X-direction side, and has the cable CB2 extended out from the right-eye optical device 31R inserted thereinto. These cables CB2 are connected to the control substrate 231.

Meanwhile, each of the insertion holes 2334, 2335, and 2336 is sealed in a state where the cables CB1 and CB2 are inserted.

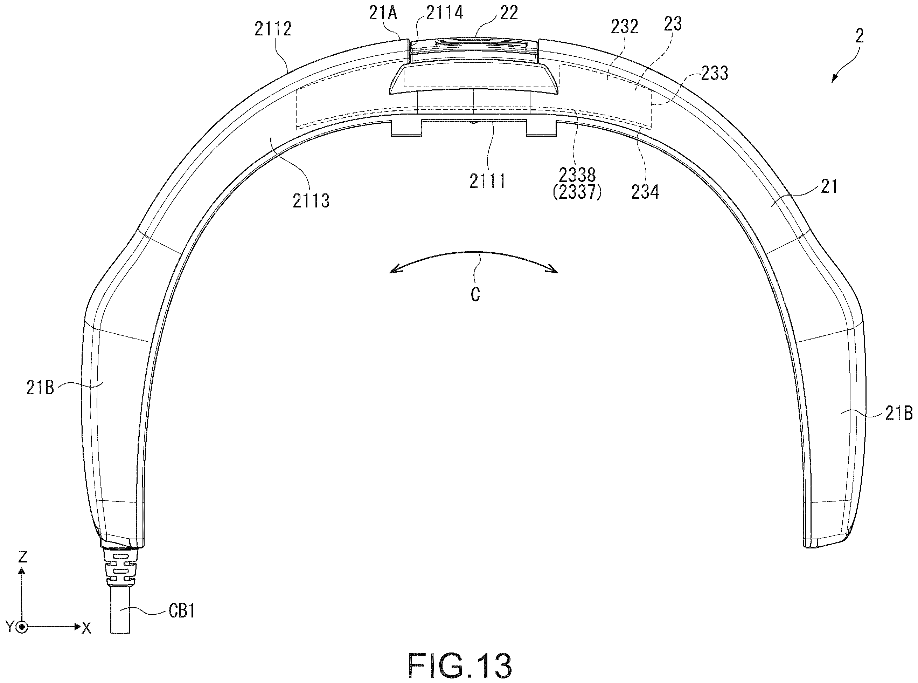

Fig. 13 is a top view illustrating the exterior case 21 of the head band portion 2.

As shown in Fig. 10, the opening 2337 is formed on a surface of the case main body 233 on the opposite side to the Z-direction, and allows communication between the outside and the internal space S in which the control substrate 231 is housed and disposed. That is, the control substrate 231 is inserted into and disposed on the inside of the case main body 233 through the opening 2337.

As shown in Fig. 13, an end edge 2338 where the opening 2337 is formed is curved along the inner surface 2111, that is, along the C direction, and is disposed along the inner surface 2111 (first curved surface).

As shown in Figs. 10 and 11, the cover member 234 includes a sheet-shaped base material 2341 and an adhesive layer 2342 which is provided on the surface of the base material 2341 on the Z-direction side. The cover member 234 has flexibility, and is attached to the end edge 2338 (second curved surface).

The base material 2341 is a flexible sheet-shaped member capable of being deformed along the curve of the end edge 2338.

The adhesive layer 2342 is equivalent to an adhesive according to the invention, is formed of an adhesive material having a waterproof property, and attaches the base material 2341 to the end edge 2338. Meanwhile, the adhesive layer 2342 may be at least provided in a region of the base material 2341 which is disposed facing the end edge 2338.

The opening 2337 is blocked by such a cover member 234. In addition, as described above, the second bearing 2333 is sealed by the ring member 2254 which is a sealing member, and each of the insertion holes 2334, 2335, and 2336 is sealed in a state where the cables CB1 and CB2 are inserted.

Thereby, the infiltration of liquid or dust into the internal space S formed within the inside case 232 is suppressed. That is, the inside case 232 has a waterproof structure, and is disposed at a position inside the exterior case 21, as described above, which corresponds to the central portion 21A.

### Effect of Embodiment

According to the virtual image display device 1 of the present embodiment described above, the following effects are exhibited.

The inside case 232 that houses the control substrate 231 is disposed inside the exterior case 21 of the head band portion 2. According to this, as compared to a case where the control substrate 231 is disposed directly inside the exterior case 21, stress acting on the exterior case 21 can be alleviated by the inside case 232. Therefore, it is possible to improve impact resistance of the control substrate 231, and to provide the virtual image display device 1 capable of being stably operated.

In addition, the exterior case 21 may have a space capable of housing the inside case 232. For example, the exterior case 21 may not be provided with an impact resistance structure in order to improve impact resistance to the control substrate 231. Therefore, it is possible to improve the degree of freedom of the shape and dimensions of the exterior case 21 and the degree of freedom of the arrangement of the inside case 232 within the exterior case 21, that is, the degree of freedom of the arrangement of the control substrate 231.

Meanwhile, the virtual image display device 1 is disposed along the head of the observer US, and may also be disposed through a helmet or the like. In this manner, when mounting targets are different from each other, optimum values such as the size or curvature of the exterior case 21 are different from each other depending on the mounting targets, it is preferable to change a design of the exterior case 21. In the present embodiment, it is possible to easily cope with a change in the design of the exterior case 21, and to suppress an increase in costs according to a design change.

Here, when the virtual image display device 1 is used outdoors, there is an increasing possibility of dust or water infiltrating into the exterior case 21, as compared to a case where the device is used indoors. The infiltration of dust or water into the exterior case 21 causes the concern of the control substrate 231 deteriorating, and there is also the possibility of a defect occurring.

On the other hand, in the present embodiment, the inside case 232 has a waterproof structure, and thus even when liquid or dust infiltrates into the exterior case 21, it is possible to suppress the infiltration of the liquid or dust into the inside case 232. Therefore, it is possible to suppress a deterioration in the control substrate 231 within the inside case 232 which is caused by liquid having infiltrated into the exterior case 21, and to reliably and stably operate the virtual image display device 1.

The case main body 233 of the inside case 232 is sealed by the cover member 234 which is attached with the adhesive layer 2342 (adhesive), in a state where the control substrate 231 is disposed therein. According to this, it is possible to simply form the inside case 232 having a waterproof property and dust resistance in addition to impact resistance. Therefore, it is possible to simplify the structure of the inside case 232, and to suppress the deterioration in the control substrate 231 through the inside case 232 having a simple configuration.

Here, the cover member 234 is a flexible sheet-shaped member.

When the cover member 234 is formed of a material having a predetermined strength, distortion or the like has a tendency to occur after attachment to the case main body 233. In this case, a gap occurs between the case main body 233 and the cover member 234, and thus there is the possibility of the waterproof property and dust resistance of the inside case 232 being damaged.

On the other hand, in the present embodiment, the opening 2337 is blocked by using the cover member 234 which is a sheet-shaped member, and thus the cover member 234 can be easily attached along the case main body 233. Therefore, it is possible to further simplify the configuration of the inside case 232, and to easily perform assembly.

In addition, even when distortion occurs in the cover member 234 after attachment due to thermal expansion, moisture change, or the like, the flexible cover member 234 warps, and thus it is possible to prevent the cover member 234 from being peeled off from the case main body 233. Therefore, it is possible to reliably secure the waterproof property and dust resistance of the inside case 232.

Since the cover member 234 is a flexible sheet member, the cover member 234 can be easily attached to the end edge 2338 (second curved surface). The inside case 232 is disposed so that the end edge 2338 faces the inner surface 2111 (first curved surface) of the exterior case 21, and thus it is possible to efficiently dispose the inside case 232 in the inside of the exterior case 21. Therefore, it is possible to achieve a reduction in the size of the head band portion 2.

The exterior case 21 includes the inner wall portion 2123 and the guide portion 2124 at the bottom 212A of the lower case 212, and is configured such that the flow channel P for circulating liquid having flowed into the exterior case 21 is formed by the inner wall portion 2123 and the guide portion 2124. The flow channel P is formed throughout the opening 2121 located at the end of the side portion 21B on the opposite side to the Z-direction.

According to this, the liquid having infiltrated into the exterior case 21 can be discharged from the opening 2121 as a discharge port through the flow channel P formed along the bottom 212A within the exterior case 21. Therefore, since the liquid having flowed into the inside of the exterior case 21 from the outside thereof can be prevented from remaining behind, and the liquid can be prevented from infiltrating into the inside case 232, it is possible to more reliably suppress a deterioration in the control substrate 231 due to the liquid.

In addition, in the side portion 21B, the lower case 212 is inclined to the opposite side to the Y-direction toward the opening 2121. According to this, when the virtual image display device 1 is worn on the observer US standing upright (or seated) against the gravitation, the flow channel P is inclined vertically downward toward the opening 2121. Therefore, the liquid having flowed into the exterior case 21 can be more efficiently discharged to the outside.

In addition, the opening 2121 for inserting one end of the arm 4 into the exterior case 21 is used as a discharge port. According to this, since a discharge port is not provided separately, it is possible to simplify the structure of the exterior case 21. In addition, it is possible to suppress an increase in the size of the exterior case 21 which is caused by a discharge port being provided.

The imaging unit 22 is attached so as to be rotatable with respect to the head band portion 2. It is possible to capture an image of the periphery of the observer US wearing the virtual image display device 1. Therefore, it is possible to cause the display unit to display an image corresponding to a captured image of the imaging unit 22, and to improve the versatility of the virtual image display device 1.

In addition, the housing member 225 constituting the imaging unit 22 includes the second shaft 2253, and the inside case 232 includes the second bearing 2333 which is an opening into which the second shaft 2253 is inserted, and which is connected to the second shaft 2253 through the ring member 2254 as a sealing member. The stereo camera 221 as an imaging element within the housing member 225 and the control substrate 231 within the inside case 232 are connected to each other by the cable CB3 passing through the second shaft 2253. According to this, it is possible to suppress the infiltration of liquid into the inside case 232 from a connecting portion between the imaging unit 22 and the control unit 23. Therefore, while securing the waterproof property and dust resistance of the inside case 232, the stereo camera 221 or the like of the imaging unit 22 configured to be rotatable with respect to the inside case 232, and the control substrate 231 within the inside case 232 can be connected to each other.

The head band portion 2 is mounted on the head of the observer US. In this manner, the head band portion 2 having the display unit 3 attached thereto is mounted on the head, and thus the display unit 3 can be disposed at a position corresponding to the eyes of the observer US.

Here, when the virtual image display device 1 is used outdoors, the possibility of an impact being applied to the head band portion 2 or the possibility of liquid such as rain and dust flowing into the main body increases against the intention of the observer US, as compared to a case where the device is used in a state where the observer is seated indoors.

On the other hand, in the present embodiment, the inside case 232 having the control substrate 231 housed therein is covered by the exterior case 21. According to this, it is possible to secure impact resistance, a waterproof property and dust resistance, and to suppress the occurrence of a defect in the operation of the virtual image display device 1.

The display unit 3 can cause the respective right eye and left eye of the observer US to visually recognize the same virtual image through the left-eye optical device 31L and the right-eye optical device 31R, and can also cause the respective eyes to visually recognize different virtual images. Therefore, it is possible to improve the convenience and versatility of the virtual image display device 1.

The virtual image display device 1 adopts a see-through configuration provided with the light guide member 313 that guides light forming a virtual image to the eyes of the observer US, and transmits outside light. Thereby, it is possible to observe the virtual image and the periphery of the observer US through the light guide member 313. Therefore, in addition to being capable of giving a sense of relief to the observer US who is visually recognizing a virtual image, it is possible to realize augmented reality by visually recognize a virtual image overlaid on a surrounding scene. Therefore, it is possible to further improve the convenience and versatility of the virtual image display device 1.

### Modification of Embodiment

The invention is not limited to the above-mentioned embodiment, but changes, modifications and the like within the range capable of achieving the object of the invention are included in the invention.

In the embodiment, the control device includes the control substrate 231 configured such that an electronic circuit is mounted on the substrate. However, the invention is not limited thereto. For example, a control device may be adopted in which electronic parts such as a control circuit are directly mounted inside the inside case 232 without providing a substrate.

In addition, as the control device formed so that respective electronic parts or a plurality of circuit substrates are connected to each other by wirings, a control device having various types of wiring configuration such as a configuration in which a wiring is directly formed on the inner surface of the case such as the exterior case 21 or the inside case 232 or the outer surface of the inside case 232, and a configuration (aerial wiring) in which a wiring member such as a wire is disposed three-dimensionally may be used in addition to a configuration in which a wiring is formed in the circuit substrate. In addition, a control device may be used in which a plurality of circuit substrates or electronic parts are communicably configured by a wireless communication unit.

In the embodiment, two cases of the exterior case 21 and the inside case 232, which is disposed inside the exterior case 21 and houses the control substrate 231, are included, and the inside case 232 has a waterproof property. However, the invention is not limited thereto, and the exterior case 21 may have a waterproof property. In this case, the inside case 232 does have a waterproof property, and thus it is possible to more reliably suppress a deterioration in the control substrate 231.

In the embodiment, two cases of the exterior case 21 and the inside case 232, which is disposed inside the exterior case 21 and houses the control substrate 231, are included. However, the invention is not limited thereto. For example, a configuration in which three or more cases are included may be used.

In addition, a configuration in which cases having a plurality of different functions are included may be used. For example, a configuration or the like may be adopted in which a first inside case having a waterproof property is disposed in the exterior case 21, a second inside case functioning as an electromagnetic shield is disposed in the first inside case, and at least a portion of the control device is disposed in the second inside case.

In addition, the inside case 232 disposed inside the exterior case 21 may be visually recognized from a gap of the exterior case 21, and may be completely covered by the exterior case 21.

In the embodiment, the inside case 232 includes the box-shaped case main body 233 and the cover member 234, and has the control substrate 231 housed therein. However, the invention is not limited thereto. For example, an inside case may be formed by covering the control substrate 231 with a resin, and the control substrate 231 covered with the resin may be disposed inside the exterior case 21. In such a configuration, it is possible to simplify the configuration of the inside case, and to secure a waterproof property. In addition, when the inside case is formed of a resin, it is also easy to form the inside case in a shape along the curve of the exterior case 21.

In the embodiment, the inside case 232 has the above-mentioned waterproof structure. However, as in the embodiment, the inside case 232 is provided with a waterproof structure, and thus it is possible to improve the degree of freedom of a design of the exterior case 21 without it being necessary to adopt configuration having a high waterproof property in the exterior case 21.

In the embodiment, the cover member 234 used is a flexible sheet-shaped member. However, the invention is not limited thereto. For example, a plate member having a high rigidity may be attached to the end edge 2338 of the opening 2337 of the case main body 233 by an adhesive. In such a configuration, it is possible to improve the strength of the inside case 232.

In addition, the aforementioned plate member may be attached directly to the end edge 2338 through a sealing member such as a packing, for example, by a screw clamp or the like.

In the embodiment, the inside case 232 is curved along the C direction, and is disposed along the inner surface 2111 of the exterior case 21. However, the invention is not limited thereto.

For example, the inside case 232 need not be curved along the exterior case 21. In addition, the inside case 232 may be disposed at any place which is located inside the exterior case 21. For example, the inside case 232 may be disposed along surfaces other than the inner surface 2111 of the exterior case 21, for example, the outer surface 2112, the upper surface 2113 or the like.

In the embodiment, the inner wall portion 2123 and the guide portion 2124 are provided on the bottom 212A of the lower case 212, and the flow channel P for circulating liquid having flowed into the exterior case 21 is formed by the inner wall portion 2123 and the guide portion 2124. However, the invention is not limited thereto.

For example, in the flow channel P, liquid in the exterior case 21 may be capable of being discharged to the outside, and the guide portion may be provided at any position located inside the exterior case 21. In addition, a discharge port may also be provided at a position corresponding to the flow channel P. In addition, only the discharge port may be provided without providing the guide portion. In addition, the flow channel P or the discharge port may not be provided.

In the embodiment, the second shaft 2253 of the imaging unit 22 and the second bearing 2333 of the inside case 232 are disposed with the ring member 2254 as a sealing member interposed therebetween. However, the invention is not limited thereto. For example, as a sealing member, various types of grease or oil and the like may be used. The ring member 2254 or other sealing member may also be provided for the other shafts.

In the embodiment, the imaging unit 22 includes the second shaft 2253 (rotating shaft), and the inside case 232 includes the second bearing 2333. However, the invention is not limited thereto. The imaging unit 22 may include a bearing, and the inside case 232 may include a rotating shaft.

In the embodiment, the imaging unit 22 is configured to be rotatable. However, the invention is not limited thereto. That is, the image capture direction of the imaging unit 22 may be fixed. In addition, the imaging unit 22 may not be provided.

In the embodiment, the exterior case 21 is formed in a substantially semicircular shape (substantially U-shape). However, the invention is not limited thereto. That is, when the head of the observer US is set to a mounting region, the head band portion 2 may be configured to be capable of being disposed along the head of the observer US (region which is along the C direction centering around the central axis of the head, and above a line passing by both eyes), and may be configured to have an arc-shaped inner surface along the head, for example, in at least a portion thereof. In addition, for example, a portion corresponding to the forehead and a region corresponding to the temporal region may be configured to substantially intersect each other.

In the embodiment, the head of the observer US is set to a mounting region, and the head band portion 2 is curved along the head (forehead). However, the invention is not limited thereto. For example, regions, other than the head, such as a lateral portion of the face of the observer US may be set to mounting regions. In such a case, the exterior case 21 of the main body equivalent to the head band portion 2 may have a shape along the mounting region, and may be configured to be capable of being disposed along the mounting region.

In the embodiment, the mounting member 24 is formed in a band shape, and is disposed around the head of the observer US. However, the invention is not limited thereto. That is, the mounting member 24 is not particularly limited insofar as the exterior case 21 is configured to be capable of being disposed along the observer US.

For example, when the virtual image display device is disposed at the mounting region along the head of the observer US, a configuration having a head cap type in which mounting is performed by covering the head, or an intersection band type (cross band type when the number of bands is two) in which a plurality of bands along the head intersect each other at the top of the head may be adopted as the mounting member.

In addition, the mounting member main body may be configured to include two or more contact members which are brought into contact with a mounting region so as to interpose the mounting region at two or more places on both sides in a front-back direction or a horizontal direction of the observer US, and a support member that supports these contact members.

In the embodiment, a configuration is illustrated in which a pair of arms 4 are included, and the pair of arms 4 support the display unit 3 from both sides from the X-direction. However, the invention is not limited thereto. For example, a configuration in which one arm 4 is included may be used. In this case, the arm 4 may be connected to substantially the center of the display unit 3 in the X-direction, or may be connected to one end side in the X-direction. In such a configuration, it is possible to reduce the number of components constituting the virtual image display device 1, and to achieve a reduction in weight. Meanwhile, in the configuration in which the display unit 3 is supported from both sides at the pair of arms 4, it is possible to more stably support the display unit 3 than in a case of support at one place.

In the embodiment, a configuration is illustrated in which the display unit 3 includes the left-eye optical device 31L and the right-eye optical device 31R. However, the invention is not limited thereto. That is, a configuration in which the display unit includes one of the left-eye optical device 31L and the right-eye optical device 31R may be adopted. In this case, a configuration in which the display unit 3 is supported by only one arm 4, for example, a configuration in which the left-eye optical device 31L is supported by only the left arm 4 may be used, and a configuration in which the display unit is supported by a pair of arms 4 may be used.

In the embodiment, a configuration is illustrated in which the arm 4 is configured to be rotatable with respect to the head band portion 2, and the position of the display unit 3 is configured to be capable of be adjusted. However, the invention is not limited thereto. For example, a configuration may be adopted in which the arm 4 includes a movable portion, and the position of the display unit 3 is capable of being adjusted. In addition, a configuration in which the arm 4 is fixed to the head band portion 2 and is not rotatable, and does not include a movable portion, that is, a configuration in which the head band portion 2 is set to have a predetermined position or angle with respect to the display unit 3 may be used.

In the embodiment, each of the light guide members 313L and 313R is fixed. However, the invention is not limited thereto. For example, the light guide members 313L and 313R may be configured to be rotatable about the rotating shaft along the X-direction on the opposite side to the observer US, independently of each other or in conjunction with each other. In this case, the rotating shaft is configured to be located on the Y-direction side or the opposite side to the Y-direction in the light guide member 313, and thus the light guide member 313 can be retreated from the visual direction of the observer US by the rotation thereof.

In the embodiment, as the image display device according to the invention, the virtual image display device 1 is illustrated in which the head of the observer US is set to a mounting region. However, the invention is not limited thereto. For example, any region such as the wrist, arm, and neck of the observer US may be set to a mounting region. In this case, the shape of the image display device (that is, shape of the head band portion 2 or the display unit 3 equivalent to the main body in the virtual image display device 1) may be set to a shape according to the mounting region.

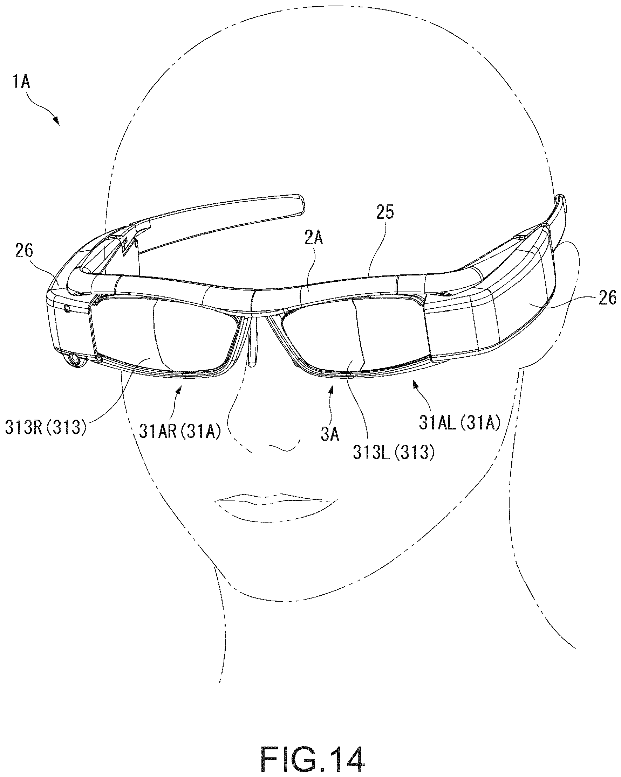

Fig. 14 is a perspective view illustrating a virtual image display device 1A according to one modification example of the invention.

In the embodiment, the display unit 3 is attached to the head band portion 2 as a main body through the arm 4. However, the invention is not limited thereto. That is, the main body and the display unit may be formed integrally with each other.

The virtual image display device 1A shown in Fig. 14 is a spectacles-type HMD which is used in a state of being mounted on the head of the observer US. The virtual image display device 1A includes a main body 2A having a control substrate provided therein and a display unit 3A.

The display unit 3A includes a pair of optical devices 31A (left-eye optical device 31AL and right-eye optical device 31AR).

The pair of optical devices 31A includes an optical unit 312 (see Fig. 4) which is not shown in Fig. 14, and a light guide member 313 (left-eye light guide member 313L and right-eye light guide member 313R) as shown in Fig. 14. Meanwhile, the optical unit 312 is disposed within an exterior case 26 of the main body 2A described later.

The main body 2A has a frame-like form of spectacles, and includes a U-shaped portion 25 and two exterior cases 26 which are worn on the observer US.

The U-shaped portion 25 has a shape along the forehead and right-left temporal regions of the observer US. The U-shaped portion 25 is provided with a nose pad member which is brought into contact with the nose of the observer US, the light guide member 313 constituting the display unit 3A, and the like.

Two exterior cases 26 are provided at positions corresponding to the temporal regions of the observer US during mounting. At least one of these two exterior cases 26 has an inside case disposed therein. Similarly to the embodiment, the inside case houses a control device that controls at least a portion of the operation of the virtual image display device 1A.

In the virtual image display device 1A configured as described above, the optical unit 312 is disposed inside the exterior case 26 constituting the main body 2A, that is, the main body 2A and the display unit 3A are formed integrally with each other.

Meanwhile, in the modification example, the control device is configured to be disposed in the exterior case 26, but the invention is not limited thereto. For example, when an internal space capable of disposing the inside case is present in the U-shaped portion 25, the inside case housing the control device may be disposed within the U-shaped portion 25.

In the embodiment, the imaging unit 22 is configured to be rotated about the rotating shaft parallel to the X-direction, and to be capable of adjusting the image capture direction in one direction. However, the invention is not limited thereto. That is, the image capture direction may also be capable of being adjusted in other directions, and the image capture direction may be fixed. In addition, the imaging unit 22 may not be provided.

In the embodiment, a controller that receives various types of input operation performed by the observer US is connected, and a portion of a function of the virtual image display device 1 is controlled by the control unit 23 in response to an input from the controller. However, the invention is not limited thereto.

For example, in a configuration in which the controller is connected, one of the virtual image display device 1 (image display device) and the controller may have at least any of a function of acquiring operation information according to the operation of the observer US, a function of acquiring image information and driving the display unit 3 in accordance with the image information, and a function of supplying power, and the other may have the remaining functions.

In addition, the virtual image display device 1 (image display device) may be connected to an image supply device (such as a PC) through the controller, and may be directly connected to the image supply device without going through the controller. In such a configuration, the virtual image display device 1 may be used as an image display portion in the image supply device, and various types of operation of the virtual image display device 1 may be controlled by the image supply device. Meanwhile, in this case, the image supply device may supply power for driving the virtual image display device 1.

In addition, a battery or the control device such as an image processing device may be disposed in the virtual image display device 1 (for example, head band portion 2 or display unit 3), and a slot such as a memory card may be further provided therein. Further, the virtual image display device 1 may be provided with an operating unit that receives the operation of the observer US, and may be provided a configuration capable of detecting a tap operation. That is, the controller may not be provided.

In the embodiment, as the virtual image display device, the see-through virtual image display device 1 is illustrated. However, the invention is not limited thereto. That is, the invention can also be applied to a non-transmission-type virtual image display device which is not capable of observing the outside world or a video see-through virtual image display device that displays an image captured by the imaging element that captures an image of the outside world.

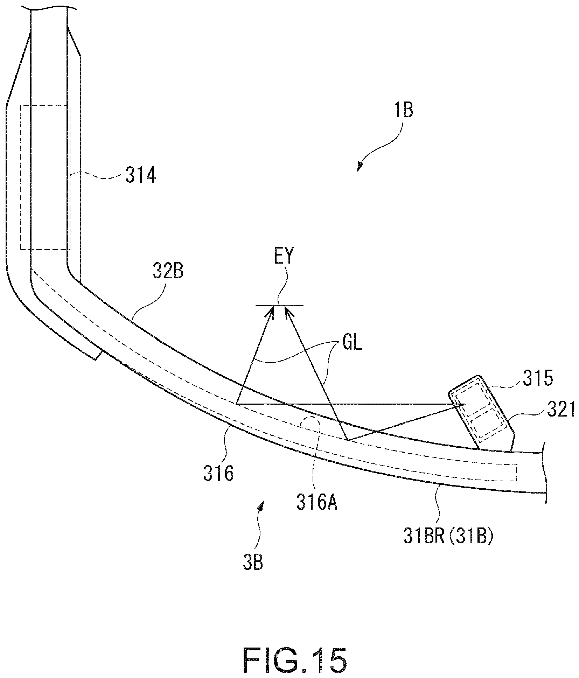

Fig. 15 is a diagram illustrating a virtual image display device 1B according to one modification example of the invention. Meanwhile, Fig. 15 illustrates a portion corresponding to the right eye side of a display unit 3B in the virtual image display device 1B.

In the embodiment, the display unit 3 includes the light guide members 313L and 313R that transmit light in the inside thereof. However, the invention is not limited thereto. For example, as in the virtual image display device 1B shown in Fig. 15, a configuration may be adopted in which image light formed by a light modulation device is reflected toward the eyes of the observer by a reflecting member which is disposed in front of the eyes of the observer, thereby allowing the image to be visually recognized.

The virtual image display device 1B shown in Fig. 15 is an HMD which is used in a state of being mounted on the head of the observer US. The virtual image display device 1B includes a display unit 3B and a main body (not shown) having the display unit 3B provided therein.

The display unit 3B includes right-eye and left-eye optical devices 31B, and a frame 32B having the optical devices 31B provided therein. The optical device 31B includes a drive device 314, a light modulation device 315, and an optical element 316. Meanwhile, Fig. 15 illustrates only a right-eye optical device 31BR.

The drive device 314 drives the light modulation device 315. The drive device 314 supplies illumination light to the light modulation device 315 through a light guide member (not shown) such as an optical fiber. In addition, the drive device 314 transmits a control signal to the light modulation device 315 through a signal line (not shown).

The light modulation device 315 is disposed at a nose pad member 321 provided in the frame 32B, and modulates illumination light on the basis of the control signal from the drive device 314 to form image light GL.

The optical element 316 is attached to the frame 32B, and is disposed in front of the eyes of the observer. The optical element 316 includes a reflecting surface 316A facing the eyes EY of the observer, and is configured such that the image light GL formed by the light modulation device 315 is reflected toward the eyes EY by the reflecting surface 316A.

Meanwhile, the virtual image display device 1B shown in Fig. 15 is configured such that the light modulation device 315 is provided in the nose pad member 321, and that the image light GL is emitted in a direction from the center of the face of the observer toward the outside. However, there is no limitation thereto. For example, a configuration may be used in which the light modulation device 315 is disposed on the temporal region side of the observer, and the image light GL is emitted in a direction from the outside of the face of the observer toward the center.

Meanwhile, as described above, the light modulation device 315 can adopt a device using a liquid crystal panel or a micromirror, and may be a reflecting member or a semi-reflecting member.

In the embodiment, the virtual image display device 1 that displays an image which is visually recognized as a virtual image by the observer US is illustrated as the image display device. However, the invention is not limited thereto, and the invention can be applied to a device that causes the observer US to visually recognize an image. For example, a configuration may be adopted in which a display unit such as a liquid crystal panel or an organic electro-luminescence (EL) panel is included at positions corresponding to both eyes of the observer US.

In addition, the invention can also be applied to a laser retinal projection-type HMD. For example, the invention may apply to an HMD in which the display unit includes a laser light source and an optical system that guides a laser light source to a user's eyes, and causes a user to visually recognize an image by causing laser light to be incident on a user's eyes to scan the retina, and forming an image on the retina.

The foregoing description has been given by way of example only and it will be appreciated by a person skilled in the art that modifications can be made without departing from the scope of the present invention as defined by the claims.

## Claims

1. A head mounted display device (1) which is wearable by an observer, comprising:
a display unit (3) configured to display an image so as to be capable of being visually recognized by the observer; and
a main body (2) having the display unit provided therein, wherein the main body is mountable on a head of the observer,
wherein the main body includes a plurality of cases (21, 232), and
the plurality of cases includes
an exterior case (21) constituting an exterior, and
an inside case (232);
wherein the exterior case includes a space for housing the inside case, the inside case being arranged within the exterior case so that at least a portion of the inside case is covered with the exterior case;
wherein the inside case has a control device (231) housed therein, the control device for controlling at least a portion of a function of the head mounted display device;
wherein the inside case has a waterproof structure and includes
a box-shaped case main body (233) having a U-shaped section in which an internal space (S) for housing the control device is formed, and which includes an opening (237) for housing the control device in the internal space, and
a cover member (234) that covers the opening, and is attached to the case main body by an adhesive (2342);
wherein the exterior case includes a first curved surface (2111) along a mounting region of the head mounted display device for facing the forehead and temporal region of the observer;
wherein the case main body includes a second curved surface (2338) that faces the first curved surface and is curved along the first curved surface;
wherein the opening (2337) is located on the second curved surface; and
wherein the cover member (234) is attached to the second curved surface.

2. The head mounted display device according to claim 1,
wherein the cover member is a flexible sheet-shaped member.

3. The head mounted display device according to claim 1 or claim 2,
wherein the exterior case includes
a flow channel (P), formed along a bottom (212A) within the exterior case, for circulating liquid flowing into the exterior case, and
a discharge port (2121) configured to discharge fluid circulating along the flow channel out of the exterior case,
wherein the bottom (212B) is inclined toward the discharge port (2121) such that when the lower case is worn by the observer standing upright the flow channel (P) is formed along the inclined bottom (212B).

4. The head mounted display device according to any one of the preceding claims, further comprising a left-eye display unit (31L) and a right-eye display unit (31R) configured to cause a left eye and a right eye of the observer to visually recognize the image, respectively, as the display unit.

5. The head mounted display device according to any one of the preceding claims,
wherein the display unit includes a light guide member (313) configured to guide light for forming the image to the eyes of the observer, and transmit outside light.

## Patentansprüche

1. Am Kopf montierte Anzeigevorrichtung (1), die von einem Betrachter getragen werden kann, umfassend:
eine Anzeigeeinheit (3), die konfiguriert ist, ein Bild anzuzeigen, sodass es von dem Betrachter visuell erkannt werden kann; und
einen Hauptkörper (2) mit der darin vorgesehenen Anzeigeeinheit, wobei der Hauptkörper an einem Kopf des Betrachters montierbar ist,
wobei der Hauptkörper mehrere Gehäuse (21, 232) enthält und
die mehreren Gehäuse
ein Außengehäuse (21), das eine Außenseite darstellt, und
ein Innengehäuse (232);
enthalten;
wobei das Außengehäuse einen Raum zur Aufnahme des Innengehäuses enthält, das Innengehäuse im Außengehäuse angeordnet ist, sodass zumindest ein Teil des Innengehäuses mit dem Außengehäuse bedeckt ist;
wobei in dem Innengehäuse eine Steuervorrichtung (231) untergebracht ist, wobei die Steuervorrichtung zum Steuern zumindest eines Teils einer Funktion der am Kopf montierten Anzeigevorrichtung dient;
wobei das Innengehäuse eine wasserfeste Struktur hat und
einen kastenförmigen Gehäusehauptkörper (233) mit U-förmigem Querschnitt, in dem ein Innenraum (S) zum Unterbringen der Steuervorrichtung gebildet ist und der eine Öffnung (237) zur Unterbringung der Steuervorrichtung im Innenraum enthält, und
ein Abdeckelement (234), das die Öffnung abdeckt und am Gehäusehauptkörper durch Klebstoff (2342) befestigt ist,
enthält;
wobei das Außengehäuse eine erste gekrümmte Oberfläche (2111) entlang eines Montagebereichs der am Kopf montierten Anzeigevorrichtung enthält, die der Stirn und Schläfenregion des Betrachters zugewandt ist;
wobei der Gehäusehauptkörper eine zweite gekrümmte Oberfläche (2338) enthält, die der ersten gekrümmten Oberfläche zugewandt ist und entlang der ersten gekrümmten Oberfläche gekrümmt ist;
wobei die Öffnung (2337) an der zweiten gekrümmten Oberfläche gelegen ist; und
wobei das Abdeckelement (234) an der zweiten gekrümmten Oberfläche befestigt ist.

2. Am Kopf montierte Anzeigevorrichtung nach Anspruch 1,
wobei das Abdeckelement ein Element in Form einer flexiblen Schicht ist.

3. Am Kopf montierte Anzeigevorrichtung nach Anspruch 1 oder Anspruch 2,
wobei das Außengehäuse
einen Strömungskanal (P), der entlang eines Bodens (212A) innerhalb des Außengehäuses gebildet ist, zum Zirkulieren einer Flüssigkeit, die in das Außengehäuse fließt, und
eine Auslassöffnung (2121), die gestaltet ist, Fluid, das entlang des Strömungskanals zirkuliert, aus dem Außengehäuse abzugeben,
enthält,
wobei der Boden (212B) zur Auslassöffnung (2121) geneigt ist, sodass, wenn das untere Gehäuse von einem aufrecht stehenden Betrachter getragen wird, der Strömungskanal (P) entlang des geneigten Bodens (212B) gebildet ist.

4. Am Kopf montierte Anzeigevorrichtung nach einem der vorangehenden Ansprüche, ferner umfassend eine Anzeigeeinheit (31L) für das linke Auge und eine Anzeigeeinheit (31R) für das rechte Auge als die Anzeigeeinheit, die gestaltet sind, ein linkes Auge und ein rechtes Auge des Betrachters zu veranlassen, jeweils das Bild visuell zu erkennen.

5. Am Kopf montierte Anzeigevorrichtung nach einem der vorangehenden Ansprüche,
wobei die Anzeigeeinheit ein Lichtleiterelement (313) enthält, das gestaltet ist, Licht zur Bildung des Bildes zu den Augen des Betrachters zu leiten und Außenlicht durchzulassen.

## Revendications

1. Dispositif d'affichage monté sur la tête (1), lequel peut être porté par un observateur, comprenant :
une unité d'affichage (3) configurée pour afficher une image de manière à pouvoir être reconnue visuellement par l'observateur ; et
un corps principal (2) ayant l'unité d'affichage qui y est fournie, dans lequel le corps principal peut être monté sur une tête de l'observateur,
dans lequel le corps principal comprend une pluralité de boîtiers (21, 232), et
la pluralité de boîtiers comprend
un boîtier extérieur (21) formant un extérieur, et
un boîtier intérieur (232) ;
dans lequel le boîtier extérieur comprend un espace pour loger le boîtier intérieur, le boîtier intérieur étant disposé à l'intérieur du boîtier extérieur de sorte qu'au moins une partie du boîtier intérieur est recouverte par le boîtier extérieur ;
dans lequel le boîtier intérieur a un dispositif de commande (231) qui y est logé, le dispositif de commande servant à commander au moins une partie d'une fonction du dispositif d'affichage monté sur la tête ;
dans lequel le boîtier intérieur a une structure imperméable et comprend
un corps principal de boîtier en forme de boîte (233) ayant une section en forme de U dans lequel un espace intérieur (S) pour loger le dispositif de commande est formé, et qui comprend une ouverture (237) pour loger le dispositif de commande dans l'espace intérieur, et
un élément de recouvrement (234) qui recouvre l'ouverture et est fixé au corps principal de boîtier par un adhésif (2342) ;
dans lequel le boîtier extérieur comprend une première surface incurvée (2111) le long d'une zone de montage du dispositif d'affichage monté sur la tête pour faire face au front et à la zone temporale de l'observateur ;
dans lequel le corps principal de boîtier comprend une deuxième surface incurvée (2338) qui fait face à la première surface incurvée et est incurvée le long de la première surface incurvée ;
dans lequel l'ouverture (2337) est située sur la deuxième surface incurvée ; et
dans lequel l'élément de recouvrement (234) est fixé à la deuxième surface incurvée.

2. Dispositif d'affichage monté sur la tête selon la revendication 1,
dans lequel l'élément de recouvrement est un élément en forme de feuille flexible.

3. Dispositif d'affichage monté sur la tête selon la revendication 1 ou la revendication 2,
dans lequel le boîtier extérieur comprend
un canal d'écoulement (P), formé le long d'une partie inférieure (212A) à l'intérieur du boîtier extérieur, pour la circulation d'un liquide s'écoulant dans le boîtier extérieur, et
un orifice de déversement (2121) configuré pour déverser un fluide circulant le long du canal d'écoulement hors du boîtier extérieur,
dans lequel la partie inférieure (212B) est inclinée vers l'orifice de déversement (2121) de sorte que lorsque le boîtier inférieur est porté par l'observateur se tenant debout, le canal d'écoulement (P) est formé le long de la partie inférieure (212B) inclinée.

4. Dispositif d'affichage monté sur la tête selon l'une quelconque des revendications précédentes, comprenant en outre une unité d'affichage d'oeil gauche (31L) et une unité d'affichage d'oeil droit (31R) configurées pour faire en sorte qu'un oeil gauche et un oeil droit de l'observateur reconnaissent visuellement l'image, respectivement, en tant que l'unité d'affichage.

5. Dispositif d'affichage monté sur la tête selon l'une quelconque des revendications précédentes, dans lequel l'unité d'affichage comprend un élément de guidage de lumière (313) configuré pour guider la lumière pour former l'image vers les yeux de l'observateur et transmettre la lumière extérieure.
